# EUROPÄISCHE PATENTSCHRIFT

(11) **EP 1 081 459 B1**
(45) Veröffentlichungstag und Bekanntmachung des Hinweises auf die Patenterteilung: **19.06.2002**
(21) Anmeldenummer: 99117112.5
(22) Anmeldetag: 31.08.1999
(51) Int. Cl.: G01C 1/02

(54) **Tachymeter-Fernrohr**
Tacheometer-telescope
Tachéomètre-télescope

(43) Veröffentlichungstag der Anmeldung: 07.03.2001
(73) Patentinhaber: Leica Geosystems AG, 9435 Heerbrugg (CH)
(72) Erfinder: Hinderling, Jürg, Dr., 9437 Marbach (CH)
(74) Vertreter: Kaminski, Susanne, Dr.

(56) Entgegenhaltungen:
- WO-A-90/12284
- DE-A- 2 750 933
- DE-A- 3 319 610
- DE-A- 3 936 966

## Beschreibung

Die Erfindung bezieht sich auf ein Tachymeter-Fernrohr nach dem Oberbegriff des Anspruches 1.

Als Tachymeter werden Theodolite mit integrierten Distanzmessern bezeichnet. In der DE 27 50 933 A wird ein elektronischer Theodolit mit integriertem elektrooptischen Distanzmesser (EDM) offenbart. Der elektrooptische Distanzmesser und das Zielfernrohr des Theodoliten weisen in einer dort beschriebenen Ausgestaltungsform ein gemeinsames Objektiv auf. In der DE 33 19 610 wird ein mehrteiliger optischer Strahlteiler offenbart, welcher eine weitere Variante für eine gemeinsame Nutzung des Objektives durch den Distanzmesser und das Zielfernrohr ermöglicht. Neben der gemeinsamen Nutzung des gleichen Objektives bieten derartige Integrationen von Distanzmessern in Zielfernrohren zusätzlich die Möglichkeit der koaxialen Anordnung des elektrooptischen Distanzmesseres und des Zielfernrohres.

Zur Distanzmessung wird entweder ein Reflektor am Zielobjekt angebracht (kooperatives Zielobjekt) und entweder manuell oder mit Hilfe einer automatischen Zielerfassung anvisiert, oder es wird auf ein natürliches Zielobjekt ohne eine solche Zielkennzeichnung (nicht-kooperatives Zielobjekt) manuell visiert. Trotz der zügigen Entwicklung der elektrooptischen Distanzmesser (EDM) während der letzten zwanzig Jahre sind aber heute sehr wenige reflektorlos messende Tachymeter kommerziell verfügbar. Soweit ein Bedarf danach gegeben war, wurden nämlich aus technischen Gründen fast alle für den Geodäsiebereich entwickelten reflektorlos messenden Vorrichtungen als Aufsatzdistanzmesser (Add On) realisiert, wobei solche Aufsatzinstrumente auf den jeweiligen Theodoliten mittels eines mechanischen oder elektromechanischen Adapters aufgesetzt wurden.

Konstruktion Mittels der oben beschriebenen können sowohl kooperative als auch nicht-kooperative Zielobjekte erfasst werden. Tachymeter mit eingebautem reflektorlos messendem elektrooptischen Distanzmesser sind zwar an sich auch schon bekannt (ZEISS REC Elta-RL). Solche Vorrichtungen werden auch sowohl zur Vermessung kooperativer Zielobjekte als auch zur Messung von Distanzen zu Objekten mit natürlich rauhen Oberflächen eingesetzt, beispielsweise zur Vermessung von schwer zugänglichen Oberflächen, wie in Steinbrüchen, bei Tunnelprofilen, Strassenprofilen, Gebäudefassaden usw.

Reflektorlos messende Distanzmesser basieren in der Regel auf dem Prinzip der Messung der Laufzeit eines emittierten optischen Strahlungsimpulses. Vorrichtungen mit kleiner Bauweise und sparsamem Energieverbrauch verwenden dabei stets eine Pulslaserdiode mit einer Ausgangsspitzenleistung von ca. 1 Watt bis mehr als 100 Watt. Bei diesen Vorrichtungen werden gepulste Infrarothalbleiterlaserdioden mit grossen emittierenden Oberflächen als Strahlungsquelle eingesetzt. Ein Nachteil ergibt sich dabei aus den relativ grossen Abmessungen der emittierenden Oberflächen dieser Laser in der Grössenordnung von 100 µm oder mehr. Dies bewirkt eine Abstrahlkeule dieser Vorrichtung von ca. 1,5 mrad oder mehr, wodurch bei einer Distanz von 100 m bereits ein Bündelquerschnitt von 15 cm vorhanden ist. Distanzen zu Strukturen, die kleiner als 15 cm sind, können daher nicht vermessen werden. Der physikalische Grund für die grossen Bündeldurchmesser besteht darin, dass die bisher eingesetzten Strahlungsquellen nicht beugungsbegrenzte Strahlung emittieren. Anderseits besteht ein Nachteil eines Strahlungsbündels mit grossem Querschnitt darin, dass bei Messungen auf geneigte oder strukturierte Oberflächen der Objekte nicht die wahre Distanz, sondern ein über die bestrahlte Fläche intensitätsgewichteter Distanzwert erfasst und damit das Messergebnis verfälscht wird.

Ein anderer Nachteil reflektorlos messender elektrooptischer Distanzmesser besteht darin, dass wegen der infraroten oder ausgedehnten Messstrahlung die aktuell anvisierte Objektstelle nicht erkennbar ist. Um aber den Zielort dennoch sichtbar zu machen, muss ein zusätzlicher Strahl, insbesondere ein Laserstrahl, mit sichtbarer und beugungsbegrenzter Emission eingesetzt werden, dessen Strahlachse zur Sendestrahlachse auch noch justiert werden muss.

Zu all diesen Schwierigkeiten kommt noch, dass ausser dem Abstand zwischen den Punkten meist auch noch zugehörige Winkel mit geodätischer Genauigkeit, und das in einem Distanzbereich von 0,1 m bis etwa 2000 m und noch mehr, erfasst werden müssen. Grundsätzlich geht es bei Vermessungsaufgaben darum, diese so ergonomisch als möglich zu gestalten. Um dieser Forderung gerecht zu werden, mussten bisher Zielpunkte mit reflexionsunterstützten Mitteln markiert werden. Solch kooperative Zielpunkte können beispielsweise sehr rasch mit einer automatischen Zielerfassung (ATR) anvisiert und mit dem konventionellen Infrarot-Distanzmesser vermessen werden.

In der DE-39 36 966 A wird eine solche Anordnung zur automatischen Zielerfassung offenbart. Dabei wird eine von einem Fernrohr eines motorisierten Theodoliten ausgesendete und am kooperativen Zielpunkt reflektierte Strahlung vom selben Femrohr auf eine elektrooptischen Messeinrichtung abgebildet. Die der Messeinrichtung nachgeordnete Auswerteeinrichtung gibt dann die Korrekturwerte für eine Ausrichtung des Fernrohres auf den Zielpunkt an den motorisierten Theodoliten weiter. Es gelingt jedoch nicht immer, am Zielobjekt ein reflexionsunterstützendes Mittel anzubringen. Gewisse Zielobjekte sind wegen unüberwindbaren Hindernissen, wie Gebäudehöhen, Flüssen, fehlender Zutrittsberechtigung auf Grundstücken etc., nicht zugänglich und daher nicht mit Reflexionsmitteln markierbar. In ein und derselben Vermessungsaufgabe müssen also sowohl Zielpunkte mit natürlicher Oberfläche als auch solche anvisiert werden, welche reflektieren. Dies war mit bekannten Tachymetem überhaupt nicht möglich. Bestehende elektronische Theodoliten haben neben dem Nachteil, nicht alle bei geodätischen Vermessungsaufgaben notwendigen Sensoren gleichzeitig in einem einzigen Instrument bereitzustellen, was die Vermessungsaufgabe ohnehin erschwert, den zusätzlichen Mangel, die geforderte Messgenauigkeit von 1 mm- insbesondere bei der reflektorlosen Distanzmessung - nicht zu erfüllen.

Eine weitere Erschwernis stellt eine wünschenswerte Miniaturisierung eines Theodoliten, d.h. eine Unterbringung mehrerer Messkomponenten auf engstem Raum dar. Denn schon die schwach mit Sensoren ausgerüsteten Theodoliten, insbesondere Theodolit-Fernrohre, welche zur Zeit erhältlich sind, haben relativ grosse, und damit schwere, äussere Abmessungen, die einem ergonomischen Feldeinsatz im Wege stehen. Dies sind Tachymeter mit automatischer Zielerfassung (ATR) oder Theodolite mit lediglich einem auf reflektorlose Ziele messenden EDM. Dies war in der Vergangenheit sicher mit ein Grund, warum eine zu vollständige Bestückung eines einzigen Theodoliten unterblieb und man gegebenenfalls verschiedene Messaufgaben mit unterschiedlichen Instrumenten bewerkstelligte. Dabei ist es besonders schwierig, Fernrohre solcher Theodolite zu miniaturisieren, welche eine automatische Zielerfassung aufweisen sollen, denn die bei geodätischen Anwendungen geforderte Messgenauigkeit beträgt typischerweise 3 bis 5 cc (= 8 prad) bzw. 1mm Punktauflösung. Solche Genauigkeiten sind lediglich mit langen Brennweiten erreichbar, was sich trotz optischer Zusatzkomponenten in einer grösseren Baulänge des optischen Systems niederschlägt. Eine Verkürzung beeinträchtigt aber gegebenenfalls die Winkelmessgenauigkeit, insbesondere wenn die automatische Zielerfassung mittels eines separaten, vom visuellen Kanal getrennten, beispielsweise biaxialen, Strahlenganges erfolgt (PCT-SE90-00233).

Der Erfindung liegt deshalb die Aufgabe zugrunde, ein Fernrohr für einen elektronischen - insbesondere, bevorzugt bezüglich beider Achsen, motorisierten - Theodoliten anzugeben, mit dem die Bedürfnisse in der Geodäsie besser abgedeckt werden können. Insbesondere ist es Aufgabe der vorliegenden Erfindung, nebst einem visuellen Fernrohr und einem, z.B. infraroten, nur auf reflektierende Zielobjekte messenden Distanzmesser, einen beugungsbegrenzten, reflektorlosen Distanzmesser zusammen mit einer miniaturisierten Sensoreinheit zur automatischen Zielpunkterfassung zu entwerfen und in ein Theodolit-Fernrohr zu integrieren.

Dabei soll das mit Sensoren bestückte Fernrohr möglichst kleine Aussenabmessungen haben, um den Anforderungen an die Handlichkeit bei Feldmessungen zu genügen. Auch der Energieverbrauch soll so gering sein, dass ein Batteriebetrieb zumindest möglich ist.

Die besondere Herausforderung der erfindungsgemässen Aufgabe besteht im besonderen darin, vier optische Kanäle von vier unabhängigen Sensoren derart ineinander zu verschachteln, dass deren Funktion im einzelnen und im gegenseitigen Zusammenwirken gewährleistet ist. Einerseits muss ein Sensor für sich einwandfrei arbeiten, anderseits dürfen die Kanäle bei gleichzeitiger Funktion nicht gegenseitig stören.

Erfindungsgemäss gelingt die Erweiterung des Aufgabengebietes für ein Fernrohr nach dem Oberbegriff des Anspruches 1 durch die kennzeichnenden Merkmale dieses Anspruches. Damit ist nicht nur die Distanzmessung zu kooperativen und nichtkooperativen Zielobjekten möglich, sondern auch zusätzlich eine Winkelbestimmung, in besonderen Fällen wahlweise mit manueller oder automatischer Anzielung. So können als zu vermessende Zielobjekte natürliche Gegenstände, wie Felsen, Bäume, aber auch Gebäude, Kirch- und andere Türme ebenso vermessen werden, wie auch durch einen Reflektor, wie Retroprisma, Reflexfolie, Rückstrahler od.dgl., unterstützte Ziele. Die optische Zielachse bildet dabei eine ausgezeichnete Richtung erstens für die Winkelmessung zur horizontalen Referenzachse, beispielsweise in Nordrichtung, und/oder zur vertikalen Referenzachse, beispielsweise der Stehachse des Theodoliten, die mit Hilfe gesonderter Winkelsensoren ermittelt werden, und zweitens für die Messung des Restwinkels zwischen Zielobjekt und Zielachse, welche mittels der automatischen Zielerfassung mit Bildauswertung und Winkelberechnung erfolgt. Selbstverständlich ist gegebenenfalls auch der Einsatz anderer positionsempfindlicher Sensoren möglich. Ein Vorteil von bildgebenden Sensoren ist jedoch die Möglichkeit der Bilddokumentation.

Für die reflektorlose Messart alleine gibt es an sich schon eine Vielzahl von Anwendungen. So ist hinlänglich bekannt, dass Distanzen bis auf 100 m auf rauhen Oberflächen ohne zusätzliche Markierung, wie Reflektoren oder Reflexmarken vermessen werden können. Bei einer geforderten Messgenauigkeit von 1 bis 3mm muss die Divergenz des Sendebündels möglichst klein sein, da andernfalls die Distanzmessung auf Grund der undefinierten Zielobjektausleuchtung nicht die geforderte Genauigkeit ergeben würde. Analoges gilt für die Divergenz des Empfangsbündels. Eine kleine Divergenz reduziert den Anteil des gleichzeitig empfangenen Umgebungslichtes, so dass das Signal/Rauschverhältnis im Empfänger vorteilhaft beeinflusst wird. Eine kleine Divergenz in einer Fixfokusanordnung hat aber anderseits den Nachteil, dass im Nahbereich die Überlappung von Sende- und Empfangsbündel gering ist. Dies wird durch die koaxiale Anordnung von Sende und Empfangsoptik wenigstens gemildert. Um die Messgenauigkeit von 1 mm zu erreichen, sind aber zusätzliche technische Massnahmen erforderlich, auf die noch eingegangen werden soll.

Während aber die klassische Vermessungsmethode bei der Katastervermessung, Bauvermessung oder Industrievermessung darin besteht, Punkte mit bekannten und unbekannten Koordinaten im Objektraum bzw. am Zielobjekt aufzunehmen und abzustecken, erfolgt erfindungsgemäss all dies mit einem einzigen Instrument. Denn auch das Aufstellen eines Instrumentes (Stationierung und Orientierung) beinhaltet einen gewissen Zeitaufwand, den es zu reduzieren gilt, indem alle Messungen mit einem einzigen Instrument durchgeführt werden. Bereits beim Aufstellen und Einrichten eines erfindungsgemässen Instruments ergibt sich aber der Vorteil, dass etwa beim Einrichten einer Messstation mit schwer zugänglichen Anschlusspunkten diese Aufgabe mittels der reflektorlosen Distanzmessung in einem Zuge erledigt werden kann. Dagegen können andere Punkte, welche mit Prismen oder Reflexmarken markiert sind, in der gleichen Aufstellung und mit demselben Instrument rationell vermessen und die Messungen dabei mittels der automatischen Zielerfassung durchgeführt werden, was Zeit einspart und zusätzlich auch die Messgenauigkeit steigert.

Aus praktischen Gründen ist es im Rahmen der Erfindung vorteilhaft, wenn das Fernrohr ausser einem jeweiligen optischen Sende- und Empfangskanal zusätzlich einen visuellen Kanal, insbesondere zu einem Okular, aufweist. Denn nicht immer ist es möglich, den Zielpunkt mit reflexionsverstärkenden oder anderen Mittel zu markieren und mit einer automatischen Zielerfassung anzuvisieren. Es gibt Situationen, bei denen es nur mit besonderem Aufwand oder gar nicht möglich ist, den Zielpunkt automatisch aufzufinden. Solche Zielobjekte ohne besondere Markierung können so visuell bzw. manuell angezielt und sodann die Distanz mittels der Distanzmessungsart zu einem natürlichen Zielobjekt ohne Zielkennzeichnung, d.h. vorteilhaft mit beugungsbegrenzter, insbesondere im sichtbaren Wellenbereich emittierter Strahlung von beispielsweise etwa 30 Bogensekunden Strahldivergenz, bestimmt. Besonders geeignet für solche reflektorlose Messungen sind Anwendungen im Gebäudebereich, wie Aussenfassaden oder auch Innenräume. Besonders bei der Anwendung in einem Innenraum bringt der sichtbare Messfleck den weiteren Vorteil, dass Zielobjekte ohne Blick durch das Fernrohr direkt mit dem sichtbaren Messfleck, wie einem Laserpunkt, angezielt werden können.

Ein weiterer Vorteil eines sichtbaren Messfleckes ergibt sich bei motorisch gesteuerten Profilaufnahmen, insbesondere von Innenräumen. Ein motorisierter Theodolit ist nämlich in der Lage, ein vorgegebenes Profil abzufahren und dabei mit dem reflektorlosen Distanzmesser die entsprechenden Polarkoordinaten auf dem Messobjekt aufzuzeichnen. Nicht selten kommt es jedoch vor, dass Gegenstände oder Personen den Messstrahl zwischen dem Instrument und dem Zielobjekt unterbrechen. In einem solchen Falle wird auf das Hindernis gemessen, was zu unerwünscht verfälschten Distanzmesswerten führt. Bei der erfindungsgemässen Vorrichtung ist aber der reflektorlose Messstrahl zweckmässig so gewählt, dass er mit blossem Auge sichtbar ist. Anzielungen auf störende Hindernisse sind daher sofort ersichtlich und können leicht korrigiert werden.

Ein weiterer Vorteil ergibt sich aus dem Zusammenwirken von sichtbaren, insbesondere den reflektorlos messenden, Strahlenbündeln mit einer automatischen Zielerfassung. Das sichtbare Strahlungsbündel, z.B. ein Laserstrahl, lässt sich nämlich, wie schon erwähnt, auch als Laserzeiger verwenden. Insbesondere ist der Messfleck auch an reflexionsunterstützten Zielobjekten mit dem blossen Auge gut sichtbar. Damit ist auch eine etwaige Abirrung der automatischen Zielerfassung leicht ersichtlich und korrigierbar.

Weitere Einzelheiten der Erfindung ergeben sich an Hand der nachfolgenden Beschreibung von in der Zeichnung schematisch dargestellten Ausführungsbeispielen. Es zeigen:
- Fig. 1: eine Perspektivansicht eines erfindungsgemässen Tachymeter-Femrohres, wovon
- Fig. 2: eine schematische Darstellung einer vereinfachten Ausführungsform veranschaulicht; die
- Fig. 3 und 4: zeigen bevorzugte Varianten zur Ausführung nach Fig. 2, und die
- Fig. 5: veranschaulicht eine alternative Ausführungsform mit fokussierbarer, reflektorlos messender Distanzmesseinheit.

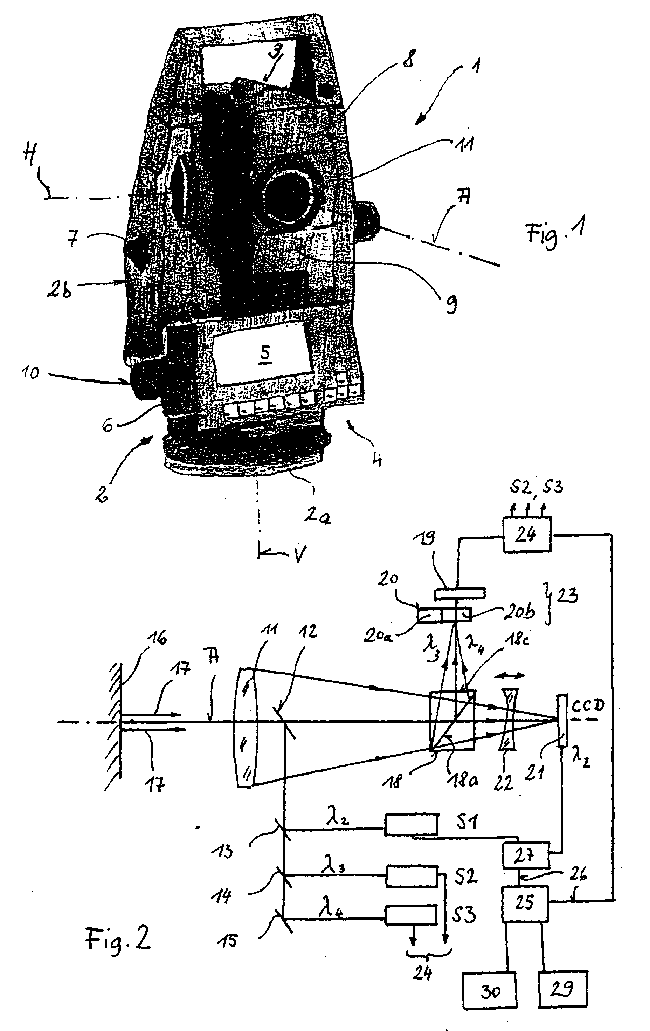

Ein Tachymeter-Fernrohr 1 weist einen Theodolit-Körper in einem Theodolitgehäuse 2 und ein daran um eine horizontale Achse H in vertikaler Richtung verschwenkbar angebrachtes Fernrohrgehäuse 3 auf. Dagegen ist das Theodolitgehäuse 2 um eine vertikale Achse V in horizontaler Richtung verschwenkbar. Der Basisteil des Instruments ist also der Theodolit selbst und weist einen statischen Fussteil 2a sowie eine um die vertikale Achse V bewegliche Alhidade 2b auf. An dieser Alhidade 2b ist die horizontale Achse H befestigt, welche das Fernrohrgehäuse 3 trägt. Das Theodolitgehäuse 2 dient also als Fernrohrstütze. Jeder Achse V, H sind in Fig. 1 nicht dargestellte, an sich bekannte Winkelsensoren 29 (siehe Fig. 2) zur Ermittlung der Stellung der beiden Gehäuse 2, 3 in horizontaler und vertikaler Richtung zugeordnet, d.h. zur Bestimmung der optischen Zielachse A des Fernrohrs, und ein Neigungssensor zur Bestimmung der Längs- und Querneigung der vertikalen Achse V zum Lot (Gravitationsvektor).

Zum Zwecke der Verschwenkung sowie zu weiteren Zwecken ist eine Tastatur oder Bedienungseinheit 4 mit einem Anzeigeschirm 5 ebenso vorgesehen wie eine von dieser Tastatur aus steuerbare, im Theodolitgehäuse 2 beim Teil 6 angebrachte Motoreneinheit 30 (siehe Fig. 2) für die Horizontalverschwenkung sowie eine unter einem Seitendeckel 7 vorgesehene Motoreneinheit 30 für die Vertikalverschwenkung. Den Achsen V und H sind also Motoren zugeordnet, welche eine automatische Verstellung der beiden Gehäuse 2 und 3 ermöglichen. Diese Komponenten sind für eine automatische Zielerfassung von zentraler Bedeutung. Unter dem Seitendeckel 7 befinden sich auch andere elektronische Komponenten, wie insbesondere ein zentraler Prozessor als Teil der später besprochenen zentralen Prozessoreinheit 25. Dieser zentrale Prozessor steuert die zeitlichen Abläufe (z.B. seriell oder parallel) der Messvorgänge ebenso wie die motorunterstützte, automatisierte und vorteilhaft mit einer später beschriebenen Kamera geführte Ausrichtung des Instruments auf ein Zielobjekt. Darüber hinaus kann auch eine manuell gesteuerte Verschwenkbarkeit der Gehäuse 2 und 3 um die Achsen V und H mittels mindestens eines Bedienungselementes 10 vorgesehen sein.

Von diesem zentralen Prozessor wird ein unter einem Dachdeckel 8 im Fernrohrgehäuse 3 vorgesehenes Prozessorboard für eine automatische Zielerfassung, vorzugsweise samt einer Positionsauswerteeinheit, oder im speziellen einer Bildverarbeitungseinheit, einerseits und ein unter einem Bodendeckel 9 im Fernrohrgehäuse 3 vorgesehenes Prozessorboard für eine Distanzmesskombination zur Distanzmessung über mindestens einen Reflektor bzw. mindestens eine Zielmarke zu einem zu vermessenden Zielobjekt einerseits und zu einem natürlichen Zielobjekt ohne eine solche Zielkennzeichnung anderseits mit Hilfe jeweils einer ersten und zweiten Sensoreinrichtung, wie sie später noch beschrieben werden, vorgesehen sein. Es versteht sich, dass die Unterbringung der verschiedenen Prozessorkomponenten auch anders erfolgen kann, doch hat sich die oben geschilderte als zweckmässig erwiesen.

An der in Fig. 1 gezeigten Vorderfront des Fernrohrgehäuses 3 befindet sich eine Frontlinse eines Femrohrobjektivs 11 eines später an Hand der Fig. 2 bis 4 im einzelnen beschriebenen optischen Systems, das im wesentlichen ein Fernrohrsystem mit mindestens 20-facher Vergrösserung, z.B. 30-facher Vergrösserung, an sich bekannter Art mit den erfindungsgemässen vorteilhaften Ausgestaltungen ist bzw. sein kann. Das Femrohrsystem überträgt beispielsweise einen sichtbaren Wellenlängenbereich λ₁ zwischen blau und rot Ebenso überträgt das Femrohrsystem die Wellenlängenbereiche λ₂, λ₃ und λ₄ von später noch zu beschreibenden Sensorstrahlengängen, die im sichtbaren und/oder im nahen Infrarotbereich liegen. Typischerweise umfasst das von einem Okular übertragene Gesichtsfeld 1,5 Grad. Es ist zu betonen, dass dieses Femrohrsystem allen Sende- und Empfangskanälen gemeinsam ist.

Fig. 2 zeigt eine vereinfachte Ausführungsform dieses erfindungsgemässen optischen Systems, wobei das Fernrohrobjektiv 11 nur durch die Frontlinse angedeutet ist. Es ist von besonderem Vorteil, dass in diesem System alle wesentlichen optischen Komponenten auf die gemeinsame optische Zielachse A ausgerichtet sind. An dieser optischen Zielachse A liegt ein relativ kleiner Einkoppelspiegel oder -prisma 12 über welchen das jeweilige Strahlenbündel eines von drei Sendern S1, S2 bzw. S3 in Richtung der optischen Zielachse A geworfen wird. Es ist klar, dass hier eine zentrale Abschattung durch den zentral an der Zielachse A gelegenen Einkoppelspiegel 12 in Kauf genommen werden muss, die eine gewisse Beeinflussung der Bildqualität am später erläuterten . positionsempfindlichen Flächensensor 21 ergibt. Mit der zentralen Anordnung des Einkoppelspiegels 12 wird jedoch sichergestellt, dass die jeweiligen senderseitigen Strahlenbündel koaxiale Wirkung erzeugen. Lage und Reflexionsgrad des Einkoppelspiegels 12 sind entscheidend für ein mögliches Übersprechen vom Sendekanal in die Empfangskanäle. Der Abstand zwischen dem Einkoppelspiegel 12 und der Frontlinse des Femrohrobjektives 11 ist daher möglichst kurz, und der Reflexionsgrad der Spiegelfläche des Einkoppelspiegels 12 nahezu bei 100% festzulegen.

Es ist bevorzugt, wenn jeder der drei Sender S1, S2 bzw. S3, welche an sich beliebige Strahlungsquellen, insbesondere Lichtquellen (im weitesten Sinne und auch unsichtbares "Licht" umfassend), aufweisen können, einen unterschiedlichen und/oder spektral trennbaren Wellenbereich abstrahlt. So gibt der erste Sender S1 eine Wellenlänge oder einen Wellenlängenbereich λ₂ ab, der zweite Sender S2 eine Wellenlänge oder einen Wellenlängenbereich λ₃, und der dritte Sender S3 eine Wellenlänge oder einen Wellenlängenbereich λ₄. Vorteilhaft unterscheidet sich mindestens einer dieser Wellenlängenbereiche von dem für das Auge sichtbare Umgebungslicht, das in der Folge mit dem Wellenlängenbereich λ₁ bezeichnet wird, und das in der Regel das wahrnehmbare Tageslicht zwischen 400 und 700 nm sein wird, jedoch gegebenenfalls auch ein spezielles Scheinwerferlicht unter dem eine Vermessungsarbeit durchgeführt wird. Die Strahlung jedes dieser drei Sender S1, S2 bzw. S3 verläuft in der aus Fig. 2 ersichtlichen Weise wobei die Strahlen der Sender S1 und S2 beispielsweise über einen teildurchlässigen ersten Spiegel 13 bzw. über einen teildurchlässigen zweiten Spiegel 14 in Richtung zum Einkoppelspiegel 12 umgeleitet werden, die Strahlung des dritten Senders S3 über einen voll verspiegelten dritten Spiegel 15. Natürlich wäre es an sich denkbar, die Spiegel 13 bis 15 so zu gestalten und gegeneinander zu versetzen, dass jeder dieser Spiegel voll verspiegelt sein kann, ohne die koaxiale Wirkung zu verlieren, doch ist die dargestellte Anordnung für ein Zusammenfallen der Achsen der Sender S1 bis S3 vorteilhaft. Vorstellbar wären aber auch beispielsweise Lochspiegel oder Spiegel mit Winkelsegmenten.

Eine andere Möglichkeit könnte darin liegen, dass bei Ansteuerung der Sender S1 bis S3 in zeitlichen Abständen ein einziger, vollverspiegelter Reflektor mittels einer Verschiebeeinrichtung aus der Position des dritten Spiegels 15 in die des zweiten Spiegels 14 bzw. des ersten Spiegels 13 verschoben wird. Selbstverständlich sind auch Kombinationen denkbar, etwa indem nur ein voll reflektierender Spiegel zwischen den Positionen des zweiten Spiegels 14 und des dritten Spiegels 15 hin- und herverschiebbar ist, wogegen für den ersten Sender S1 ein teilreflektierender erster Spiegel 13 vorgesehen ist. Die letztere Kombination wird man insbesondere dann anwenden, wenn etwa zwar die Sender S2 und S3 in zeitlichen Abständen Strahlung emittieren, der erste Sender S1 aber gleichzeitig mit dem einen oder anderen oder beiden, insbesondere aber gleichzeitig mit dem zweiten Sender S2. Dies ist besonders zur automatischen Zielerfassung günstig, wie später noch erläutert wird.

In einem praktischen Beispiel kann etwa der Wellenlängenbereich λ₂, der Wellenlängenbereich der automatischen Zielerfassung, im Infrarot- oder im sichtbaren Bereich liegen und zweckmässig ein vorbestimmtes Spektrum umfassen, der Wellenlängenbereich λ₄ liegt in einem vom Wellenlängenbereich λ₂ abweichenden Infrarotbereich und der Wellenlängenbereich λ₃ liegt im sichtbaren Bereich des Lichtes, ist jedoch ein beugungsarmes Strahlenbündel. Natürlich wäre es auch möglich, lediglich einen einzigen Sender vorzusehen, und diesen durch Vorschalten entsprechender Filter bzw. Objektive zur wechselweisen Abgabe von Strahlung unterschiedlicher Wellenlängenbereiche und Divergenzen zu benutzen. Auch sind heute Laser mit mehreren Wellenlängen bekannt, bei denen die Wellenlänge elektronisch verändert werden kann.

Mittels des Einkoppelspiegels 12 wird der jeweilige Sendestrahl koaxial entlang der Zielachse A auf eine Fläche eines Zielobjektes 16 geworfen, von wo diese Strahlung entweder über einen an der Fläche angebrachten Spiegel bzw. Reflektor, wie ein Retroprisma, eine Reflexfolie, ein Rückstrahler, Zieltafeln mit Erkennungsmerkmalen od.dgl., zum Femrohrobjektiv 11 zurückgestrahlt wird oder von einer natürlichen Oberfläche des Zielobjekts 16 ohne eine solche Zielkennzeichnung zurückgestrahlt wird. Das bedeutet, dass reflektierte Strahlen 17 entlang der Zielachse A koaxial wieder in das Fernrohrobjektiv 11 eintreten.

Hinter dem Einkoppelspiegel 12 sind Strahlengänge für mindestens drei Sensoreinrichtungen vorgesehen. Es handelt sich dabei um einen ein Strahlenbündel über eine teilverspiegelte Fläche 18a eines Strahlenteilerprisma 18 empfangenden Empfangssensor 19, der beispielsweise zusammen mit einem zweiteiligen Filter 20 Teil einer Distanzmesskombination 23 ist, und um einen positionsempfindlichen Flächensensor 21, wie ein PSD-, CCD-, CMOS-Chip oder ein sonstiges Photo-ASIC. Bevorzugt ist die Verwendung einer CCD- oder CMOS-Kameraeinheit. Vor dieser Kameraeinheit ist eine lediglich durch eine Linse angedeutete Fokussiereinheit 22, um ein scharfes Bild des Zielobjektes 16 auf die Sensorfläche des Flächensensors 21 der Kamera zu werfen. Wird ausschliesslich auf kooperative Ziele anvisiert bzw. gemessen, so genügt auch eine Fixfokusanordnung, und die Fokussiereinheit 22 kann weggelassen werden. Die Sensorfläche ist vorteilhaft, entweder durch entsprechende Auslegung der einzelnen lichtempfindlichen Elemente oder durch ein vorgeschaltetes optisches Bandpassfilter exklusiv für Strahlung des Wellenlängenbereichs λ₂ nur für die vom ersten Sender S1 abgegebene Strahlung empfindlich. Das zusammen mit dem Objektiv erzeugte Gesichtsfeld bzw. die Divergenz sollte im Bereiche zwischen 0,3 und 3 Grad liegen.

Im Falle der Distanzmesskömbination 23 soll diese zweierlei Zwecken dienen, nämlich einerseits zur Distanzmessung über mindestens einen Reflektor bzw. mindestens eine Zielmarke zu einem zu vermessenden Zielobjekt und anderseits zu einem natürlichen Zielobjekt ohne eine solche Zielkennzeichnung. Zu diesem Zweck muss die Distanzmesskombination 23, sofern man nicht für jede Art der Messung gesonderte Sensoreinrichtungen verwenden will, exklusiv für die Wellenbereiche λ₃ und λ₄ der Sender S2 und S3 empfindlich gemacht werden, welche letztere Sender den beiden oben genannten Arten der Distanzmessung zugeordnet sind. Dies kann durch das Filter 20 geschehen, welches in einem ersten Filterbereich 20a nur den Wellenlängenbereich λ₃ durchlässt, wenn dieser erste Filterbereich 20a vor den Empfangssensor 19 geschaltet wird, und welches in einem zweiten Filterbereich 20b nur den Wellenlängenbereich λ₄ durchlässt, wenn dieser zweite Filterbereich 20b vor den Empfangssensor 19 geschaltet wird. Bei einer vereinfachten Sensoreinrichtung wird das Filter 20 als Doppelbandpass mit einem Durchlass für die Wellenlängenbereiche λ₃ und λ₄ realisiert. Eine weitere Vereinfachung wird durch Aufbringen eines optischen Dünnschichtfilms mit Doppelbandpasscharakteristik auf einer Deckfläche 18c des Strahlenteilerprismas 18 erreicht.

Diese Wellenlängenbereiche λ₃, λ₄ werden von den zweckmässig als Laser, z.B. Laserdiode, oder LED gebildeten Sendern S2 und S3 abgegeben. Dabei kann im Falle des Wellenlängenbereichs λ₄ der zugehörige dritte Sender S3 ohne weiteres eine relativ grosse Strahlendivergenz aufweisen, da dieser Teil der Distanzmessung - Empfangssensor 19 und zweiter Filterbereich 20b - für reflexionsunterstützte Zielobjekte zugedacht ist. Typischerweise beträgt das Gesichtsfeld bzw. die Strahlendivergenz für diese Distanzmessung 0,1 Grad, wobei Sender und Empfänger mit Fixfokus arbeiten können. Der Empfangssensor 19 kann recht unterschiedlich ausgebildet werden, doch verwendet man bevorzugt eine Avalanche-Photodiode oder ein PIN-FET.

Für die reflektorlose Distanzmessung wird der selektiv nur für die Strahlung vom Wellenlängenbereich λ₃ des zweiten Senders S2 durchlässige erste Filterbereich 20a vor den Empfangssensor 19 geschoben. Wie schon erwähnt, emittiert der zweite Sender S2 einen beugungsbegrenzten, sichtbaren Wellenlängenbereich. Das wirksame Messfeld (die Messfleckgrösse) beträgt dann typischerweise nur 30 Bogensekunden bei der in Kombination mit der Grösse der Sendelicht-Austrittsöffnung physikalisch kleinst möglichen Strahlungsdivergenz. Diese geringe Strahlendivergenz ermöglicht es, retroreflektierende oder auch mit Zielmarken versehene Ziele über eine Entfernung von mehreren Kilometern, z.B. 10 km, zu messen, wogegen die oben erwähnte andere Messart mittels des dritten Senders S3 besser für näher gelegene Ziele eingesetzt wird. Der zweite Sender S2 und der Empfangssensor 19 können mit Fixfokus arbeiten. Wie schon aus dem oben Gesagten hervorgeht, können beide Betriebsarten oder die Kombination der Sensoreinheiten 19, 20a und 19, 20b mit ein und derselben ersten Steuer- und Auswerteeinheit 24 verbunden sein (was bevorzugt ist), obwohl es auch möglich wäre, jeweils gesonderte Auswerteeinheiten vorzusehen und mit dem Umschalten des Filters 20 auch von einer Auswerteeinheit auf die andere umzuschalten.

An den Empfangssensor 19 ist an die oben erwähnte erste (und beiden Arten der Distanzmessung gemeinsame) Steuer- und Auswerteeinheit 24 - das oben erwähnte, unter dem Bodendeckel 9 untergebrachte Prozessorboard für die Distanzmessung - angeschlossen, welche auch die Sender S2 und S3 steuert, um aus der Laufzeit zwischen der Abgabe eines Sendeimpulses von einem der Sender S2 oder S3 bis zum Empfang durch den Empfangssensor 19 die Distanz zum anvisierten Zielobjekt 16 zu errechnen. Diese erste Steuer- und Auswerteeinheit 24 ist mit der ebenfalls an Hand der Fig. 1 erwähnten zentralen Prozessoreinheit 25 über einen Bus 26 oder eine andere Art von Schnittstelle verbunden, über den sie gegebenenfalls die Taktsignale eines im zentralen Prozessor der zentralen Prozessoreinheit 25 vorgesehenen Taktgenerators erhält. Dem Taktsignal kommt eine besondere Bedeutung zu, falls die Sensoren gleichzeitig (parallel) arbeiten, denn in diesem Falle sind die Messdaten von Distanz, Winkel und Motorenstellung zu synchronisieren. Von der zentralen Prozessoreinheit 25 werden auch die erwähnten, an sich bekannten, Motoreneinheiten 30 des Theodoliten gesteuert, wobei eine Positions- bzw. Winkelrückmeldung von Winkelsensoren 29 des Theodoliten an die zentrale Prozessoreinheit 25 abgegeben wird.

Für die automatische Zielerfassung (ATR) arbeiten der erste Sender S1 und der positionsempfindliche Flächensensor 21, vorzugsweise ein Bildsensor (CCD), zusammen. Der erste Sender S1 emittiert eine Infrarot- oder sichtbare Strahlung vom Wellenlängenbereich λ₂ (z.B. etwa 800 nm Wellenlänge) und weist zweckmässigerweise eine Laserdiode oder eine LED auf. Das Gesichtsfeld wird typischerweise etwa 1,5 Grad betragen und liegt damit in einem vergleichbaren Bereich wie dasjenige des visuellen Fernrohres mit dem Fernrohrobjektiv 11 selbst. Es ist bevorzugt, wenn die Gesichtsfelder der automatischen Zielerfassung und des visuellen Fernrohres gleich gross sind. Dies ist nicht zuletzt deshalb von Bedeutung, weil damit etwaige Abirrungen der automatischen Zielerfassung leicht überprüft und korrigiert werden können.

An den Flächensensor 21 ist dementsprechend eine Positions- oder, im speziellen Fall, eine Bildauswertschaltung auf einer zweiten Steuer- und Auswerteeinheit 27 angeschlossen. Die elektronische zweite Steuer- und Auswerteeinheit 27 beinhaltet unter anderem die Funktionen zur Bildparametereinstellung, wie Verschlusszeitregelung, Zielbeleuchtungssteuerung für den Sender S1, Fragmentierung der Sensorfläche, aber auch zur Bilderfassung, Zielobjektidentifikation, Bildverarbeitung, Bildauswertung und/oder Winkelberechnung zum Zielobjekt. Die Bildauswertschaltung (an sich bekannter Art) entspricht jenem Prozessorboard, das nach der Beschreibung der Fig. 1 unter dem Dachdeckel 8 gelegen ist. Es handelt sich dabei vorteilhaft entweder um ein Mikroprozessorboard oder um ein Digitales Signalprozessorboard (DSP).

Während eines automatischen Messablaufs arbeiten die zweite Steuer- und Auswerteeinheit 27 und die zentrale Prozessoreinheit 25 eng zusammen: Mit der zweiten Steuer- und Auswerteeinheit 27 wird zunächst eine Führungsgrösse zur Positionierung auf das jeweilige Ziel bzw. die Zielsuche erzeugt und von der zentralen Steuer- und Regelungseinheit der zentralen Prozessoreinheit 25 übernommen. Diese richtet den motorisierten Theodolit auf den Zielpunkt aus, und anschliessend wird die Zielerkennung und -analyse sowie die Zielpunktvermessung (Berechnung von Horizontal- und Vertikalwinkel) relativ zu einer Referenzachse durchgeführt, welch letztere vorteilhaft die Zielachse A sein kann. Der erste Sender S1 kann dabei entweder von der zweiten Steuer- und Auswerteeinheit 27 oder direkt von der zentralen Prozessoreinheit 25 gesteuert werden. Er kann beispielsweise auch über eine längere Zeitdauer eingeschaltet sein, während gleichzeitig die Sender S2 und S3 abwechselnd gepulstes oder moduliertes Licht abstrahlen.

Zielpunkte, welche mit einem Reflektor oder einem reflexionsunterstützten Zubehörteil markiert sind, werden mittels der so realisierten automatischen Zielerfassung und dem Distanzmesser mit grossem Strahlungsbündel vermessen. Die Verwendung des Distanzmessers mit grossem Messfeld empfiehlt sich vor allem aus zwei Gründen. Erstens braucht die automatische Zielerfassung, die den ersten Sender S1, den Flächensensor 21 und die zweite Steuer- und Auswerteeinheit 27 aufweist, zusammen mit der davon gesteuerten motorisierten Positioniereinheit des Theodoliten so nicht genau auf das Zielobjekt ausgerichtet zu werden, und es kann dennoch der Zielpunkt vollständig und mit der geforderten Genauigkeit vermessen werden. Die Zielerfassung misst dabei den Restwinkel zwischen Richtung der Zielachse A und Zielpunkt, so dass erheblich an Zeit gewonnen wird. Zweitens kann aber auch im Falle von bewegten Zielobjekten die Bahn des Zielpunktes ohne störende Signalunterbrüche automatisch aufgenommen bzw. vermessen werden, da wegen des grossen Gesichtsfeldes der beteiligten Sensoren das Zielobjekt selbst bei ruckweisen Bewegungen das Messfeld nicht ohne weiteres verlassen kann.

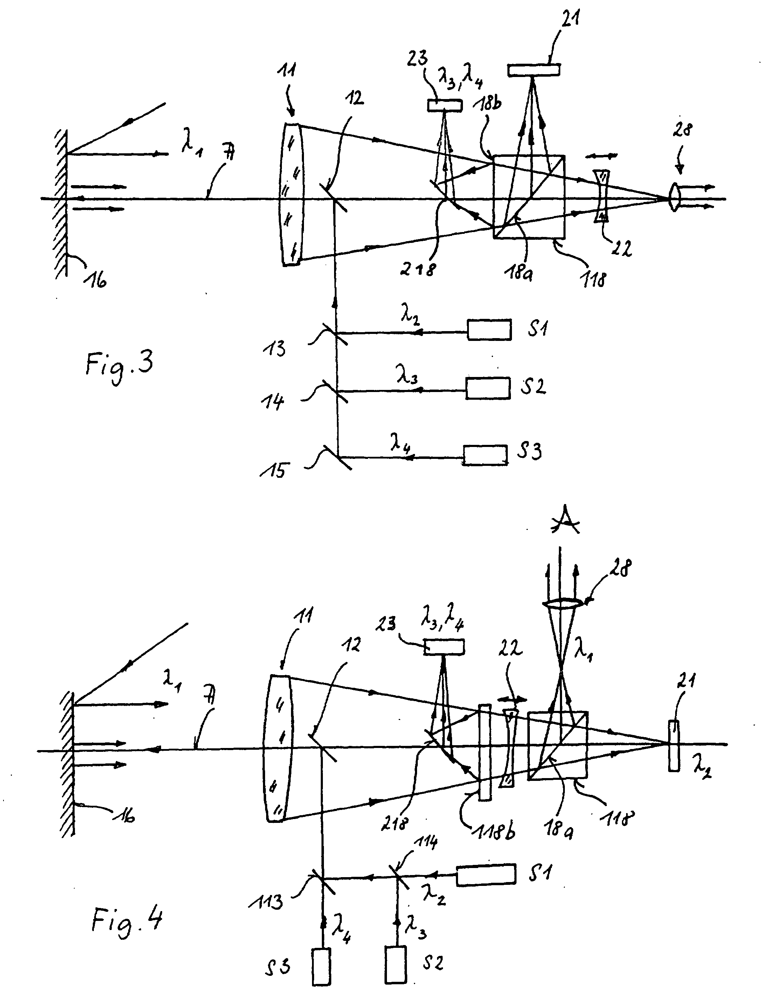

Die Ausführungsformen nach den Fig. 3 und 4 unterscheiden sich von der der Fig. 2 vor allem auch dadurch, dass sie eine visuelle Kontrolle über einen zusätzlich vorgesehenen Okularstrahlengang ermöglichen. Teile gleicher Funktion besitzen daher in diesen Figuren dieselben Bezugszeichen wie in Fig. 2. Teile nur ähnlicher Funktion besitzen dasselbe Bezugszeichen mit Zusatz einer Hunderterziffer.

Unterschiedlich ist in Fig. 3 dass die Fokussiereinheit 22 im Strahlengang eines Okulars 28 liegt, dem Strahlung des Wellenlängenbereichs λ₁, d.h., wie ersichtlich, des aus der Umgebung auf das Zielobjekt 16 einfallenden Lichtes, zugeführt wird. Will man nicht nur im visuellen Fernrohrkanal, der das Fernrohrobjektiv 11, ein Teilerprisma 118, die Fokussiereinheit 22 und das Okular 28 aufweist, ein scharfes Bild erzeugen, sondern auch auf dem Flächensensor 21, so kann es zweckmässig sein, das Fernrohrsystem mit dem Fernrohrobjektiv 11 in an sich bekannter Weise mit einer Fokussiermöglichkeit auszurüsten. Denn der zum Flächensensor 21 (dessen zugehörige elektronische Schaltung hier nicht dargestellt ist und der der Fig. 2 entspricht) führende Strahlengang ist hier von der optischen Zielachse A mittels eines Teilerprismas 118 weg gerichtet, das mit seiner teilverspiegelten Fläche 18a Licht zum Flächensensor 21 umlenkt. Dieses Teilerprisma 118 besitzt aber auch noch eine vordere teilverspiegelte Frontfläche 18b, die das einfallende Licht auf einen kleinen Auskoppelspiegel 218 wirft, der es seinerseits zur Distanzmesskombination 23 umlenkt. Es sei erwähnt, dass die teilverspiegelten Flächen 18a bzw. 18b als besonders anspruchsvolle Dünnschichtfilme zwecks effizienter Trennung der Wellenlängenbereiche λ₁ und λ₂ einerseits und der Wellenlängenbereiche λ₃ bzw. λ₄ anderseits auszubilden sind. Die Oberfläche des Auskoppelspiegels 218 stellt eine Multisegmentoptik insbesondere für die Distanzmessung im Nahbereich dar. Die Segmente ergeben unterschiedliche Brennweiten, wobei jedes Segment ein Teilintervall des Distanzbereiches abdeckt. Auf diese Weise wird der oben geschilderte Nachteil einer geringen Überlappung von Sende- und Empfangsbündel insbesondere bei einer kleinen Divergenz der Senderkeule behoben, und es wird eine tadellose Distanzmessung auch im Nahbereich ermöglicht. Massnahmen, um mangelnde Bildüberlappung im Nahbereich zu beheben, sind auch an anderer Stelle im Strahlengang denkbar, jedoch nicht am Fernrohrobjektiv 11 und am Teilerprisma 118, da diese das visuelle Bild im Strahlengang des Okulars 28 (sofern vorgesehen) negativ beeinflussen würden.

Während die optische Anordnung der Sender S1 bis S3 in Fig. 3 der der Fig. 2 entspricht, zeigt Fig. 4 wie einer der Spiegel 13-15 entfallen kann. Hier sind zwei teilreflektierende-Spiegelflächen 113,114 vorgesehen, die im Falle der zweiten teilreflektierenden Spiegelfläche 114 einerseits den Wellenlängenbereich λ₂ hindurchlässt und den Wellenlängenbereich λ₃ zur ersten teilreflektierenden Spiegelfläche 113 hin reflektiert, wogegen die erste teilreflektierende Spiegelfläche 113 den Wellenlängenbereich λ₄ durchlässt und Licht der Wellenlängenbereiche λ₂ bzw. λ₃ nach oben zum Einkoppelspiegel 12 an der optischen Zielachse A hin reflektiert. Insofern kann sich so ein kompakterer Aufbau ergeben. Im Hinblick auf eine mögliche Selektivität der Reflexion können die teilreflektierenden Spiegelflächen 113 und/oder 114 (übrigens auch die Spiegel 13 und 14 der vorigen Figuren) als dichroitische Spiegel ausgebildet werden. Man muss sich allerdings vor Augen halten, dass die Beschichtung für den ersten Spiegel 13 bzw. die erste teilreflektierende Spiegelfläche 113 deshalb besonders anspruchsvoll ist, weil hier ja alle drei Wellenlängenbereiche λ₂, λ₃ bzw. λ₄ zusammengeführt werden. Auch ist es im Rahmen der Erfindung durchaus möglich, ähnlich der Distanzmesskombination 23 an der Empfängerseite, einen gemeinsamen Sender für mindestens zwei Wellenlängen vorzusehen und eine Umschaltung von einer Wellenlänge auf die andere etwa mittels einer optischen Filterscheibe oder durch elektrisches Umschalten an einem dafür vorgesehenen Laser umschaltbarer Wellenlänge durchzuführen, beispielsweise durch Verstimmen der wirksamen Gitterperiode eines DBR-Lasers (Bragg-Lasers) oder durch Ein- und Ausschalten eines Frequenzverdopplers.

An der Empfängerseite ist ebenfalls ein Unterschied zum Aufbau nach Fig. 3 festzustellen. Hier liegt das Okular an der Ausgangsseite des Teilerprismas 118 und erhält Licht von der teilreflektierenden Fläche 18a, wogegen der Flächensensor 21 an der optischen Zielachse A hinter dem Teilerprisma 118 liegt. Um aber für das Okular 28 ein scharfes Bild zu erhalten, ist die Fokussiereinheit 22 vor das Teilerprisma gestellt, was den Vorteil ergibt, dass diese Fokussierung sowohl für das Okular als auch für den Flächensensor 21 wirksam ist. Wenn man aber nicht ein weiteres Teilerprisma zum Ausspiegeln des Distanzmessstrahlenganges zur Distanzmesskombination 23 einsetzen möchte, sondern wegen ihres kompakten Aufbaues die Art der Strahlenauskopplung wählen möchte, wie sie in Fig. 3 durch die teilverspiegelte Frontfläche 18b erreicht wird, so kann eine teilverspiegelte Platte 118b eingesetzt werden, die denselben Dienst tut. Daraus ist ersichtlich, dass insgesamt der Aufbau nach Fig. 4 zu bevorzugen ist, da sie auf einfache Art eine fokussierbare automatische Zielerfassung ermöglicht.

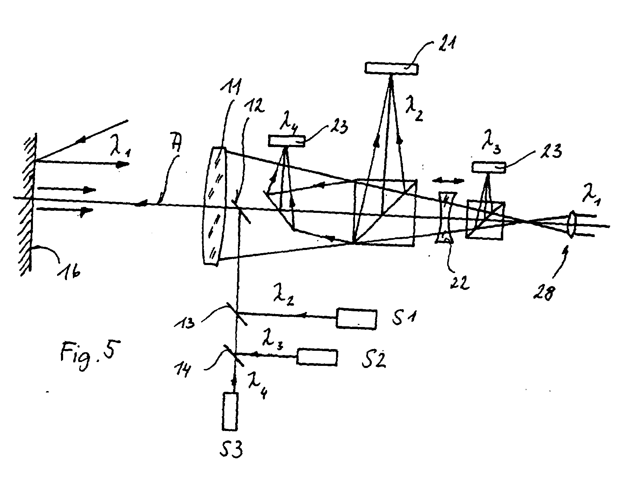

Fig. 5 unterscheidet sich von den zuvor beschriebenen Ausführungsbeispielen, wie besonders der Fig. 3, dadurch, dass für die Wellenlängenbereiche λ₃ und λ₄ jeweils gesonderte Sensoreinheiten der Distanzmesskombination 23 vorgesehen sind, so dass ein umschaltbares Filter jedenfalls entfallen kann. Die Sensoreinheiten der Distanzmesskombination 23 sind dann entweder bereits durch entsprechende Auswahl auf den jeweiligen Wellenlängenbereich ausgerichtet oder es ist ihnen jeweils ein der gewünschten Wellenlänge entsprechendes optische Filter vorgeschaltet. Denkbar wäre natürlich auch, dass die von Zielachse A weg zu den Einheiten der Distanzmesskombination 23 ausspiegelnden Flächen entsprechend wellenselektiv sind.

Für die hohe geforderte Punktmessgenauigkeit von 1 bis 3 mm ist es von Vorteil, dass alle Sensoren eine gemeinsame Zielachse A besitzen, welche letztere auch eine ausgezeichnete Referenzachse sowohl für alle Distanz- und Winkelsensoren im Fernrohr als auch für die Winkelsensoren im Theodolit bildet. Eine gemeinsame Zielachse A vereinfacht das Eichmodell und den Einfluss nicht oder nur umständlich messbarer Parameter, wie Neigung des Bildobjekts zur Zielachse A. Beispielsweise ist eine Anordnung mit gemeinsamer Zielachse parallaxfrei, d.h. die Rohmesswerte für die Winkel sind distanzunabhängig. Ferner ist der Einfluss der Zielobjektneigung zur Zielachse A auf Winkel- und Distanzmessung gering.

## Patentansprüche

1. Tachymeter-Fernrohr zur optischen Distanzmessung in der geodätischen, industriellen und bautechnischen Vermessung mit
- einem optischen Fernrohrobjektiv (11);
- einem motorisierten Theodolit als Fernrohrstütze;
- einer zentralen Prozessoreinheit (25) zum Steuern und Regeln der motorisierten Theodolitachsen (H, V);
- einer ein erstes Strahlenbündel mit einem ersten Wellenlängenbereich λ₂ auf ein zu vermessendes Zielobjekt (16) aussendenden Sendeeinrichtung (S1, S2, S3) mit einem ersten Sender (S1) und/oder einem zweiten Sender (S2) und/oder einem dritten Sender (S3);
- einer ersten optoelektronischen Sensoreinrichtung mit einem positionsempfindlichen Flächensensor (21) für den Empfang der am Zielobjekt (16) reflektierten Strahlen des ersten Strahlenbündels;
- einer dieser ersten optoelektronischen Sensoreinrichtung zugeordneten zweiten Steuer- und Auswerteeinheit (27) für die automatische Zielerfassung, gegebenenfalls mit Winkelbestimmung des Restwinkels;
**dadurch gekennzeichnet,**
- dass die Sendeeinrichtung (S1, S2, S3) zur Aussendung eines zweiten Strahlenbündels mit einem zweiten Wellenlängenbereich λ₃ und eines dritten Strahlenbündels mit einem dritten Wellenlängenbereich λ₄ angeordnet ist, wobei das zweite Strahlenbündel mit dem Wellenlängenbereich λ₃ im wesentlichen beugungsbegrenzt ist;
- und dass eine Distanzmesskombination (23) vorgesehen ist zur Distanzmessung über wenigstens einen Reflektor bzw. wenigstens eine Zielmarke zu dem zu vermessenden Zielobjekt (16) einerseits und über die natürliche Oberfläche des Zielobjektes (16) ohne eine solche Zielkennzeichnung anderseits, mit Hilfe einer zweiten Sensoreinrichtung (19, 20a, 20b), welche in zwei Betriebsarten (20a, 20b) betreibbar ist, oder mit Hilfe einer zweiten Sensoreinrichtung (19, 20a) und einer dritten Sensoreinrichtung (19, 20b) für den Empfang der am Zielobjekt (16) reflektierten Strahlen jeweils eines der zweiten und dritten Strahlenbündel mit den jeweiligen Wellenlängenbereichen λ₃ bzw. λ₄;
- und dass eine der Distanzmesskombination (23) zugeordnete erste Steuer- und Auswerteeinheit (24) vorgesehen ist zur Auswertung eines Signals, das den am Zielobjekt (16) reflektierten Strahlen jeweils eines der zweiten und dritten Strahlenbündel mit den jeweiligen Wellenlängenbereichen λ₃ bzw. λ₄ entspricht, und zur Ermittlung der Distanz aus Laufzeit und/oder Phasenlage zum gesendeten Signal;
- und dass die Zielachsen aller dieser Sensoreinrichtungen (19, 20a; 19, 20b; 21) zusammenfallen und eine gemeinsame Achse (A) bilden;
- und dass die drei Strahlenbündel mit den jeweiligen Wellenlängenbereichen λ₂, λ₃, λ₄ und die am Zielobjekt (16) reflektierten, von den Sensoreinrichtungen (19, 20a; 19, 20b; 21) empfangenen Strahlen koaxiale Wirkung haben.

2. Tachymeter-Fernrohr nach Anspruch 1, **dadurch gekennzeichnet, dass** es ausser optischen Sende- und Empfangskanälen zusätzlich einen visuellen Kanal, insbesondere zu einem Okular (28), aufweist.

3. Tachymeter-Fernrohr nach Anspruch 1 oder 2, **dadurch gekennzeichnet, dass** wenigstens ein Strahlengang von einem dichroitischen Teiler (13-15; 18a; 18b, 118b, 218) umgeleitet ist.

4. Tachymeter-Fernrohr nach einem der vorhergehenden Ansprüche, **dadurch gekennzeichnet, dass** wenigstens eine aller dieser Sensoreinrichtungen (19, 20a; 19, 20b; 21) und/oder die Sendeeinrichtung (S1, S2, S3) über die jeweilige Steuerund Auswerteeinheit (24, 27) und die zentrale Prozessoreinheit (25), oder der erste Sender (S1) direkt vom zentralen Prozessor (25) seriell ansteuerbar ist.

5. Tachymeter-Fernrohr nach einem der vorhergehenden Ansprüche, **dadurch gekennzeichnet, dass** wenigstens eine aller dieser Sensoreinrichtungen (19, 20a; 19, 20b; 21) und/oder die Sendeeinrichtung (S1, S2, S3) über die jeweilige Steuerund Auswerteeinheit (24, 27) und die zentrale Prozessoreinheit (25), oder der erste Sender (S1) direkt vom zentralen Prozessor (25) parallel bzw. gleichzeitig ansteuerbar und aktiv ist.

6. Tachymeter-Fernrohr nach Anspruch 5, **dadurch gekennzeichnet, dass** der erste Sender (S1) der Sendeeinrichtung (S1, S2, S3) bzw. die erste optoelektronische Sensoreinrichtung (21) für die Bild- oder Positionsauswertung gleichzeitig mit dem zweiten Sender (S2) der Sendeeinrichtung (S1,S2,S3) bzw. entweder der zweiten in der zweiten Betriebsart (20b) betriebenen Sensoreinrichtung (19, 20a, 20b) oder der dritten Sensoreinrichtung (19, 20b) ansteuerbar ist, wobei die zweite in der zweiten Betriebsart (20b) betriebene Sensoreinrichtung (S1, S2, S3) bzw. die dritte Sensoreinrichtung (19,20b) für die Distanzmessung über mindestens einen Reflektor bzw. mindestens eine Zielmarke zu einem zu vermessenden Zielobjekt (16) vorgesehen ist.

7. Tachymeter-Fernrohr nach einem der vorhergehenden Ansprüche, **dadurch gekennzeichnet, dass** es ein an einem Theodolitgehäuse (2) angeordnetes Fernrohrgehäuse (3) aufweist, und dass wenigstens eine der Steuer- und Auswerteeinheiten (24, 27) und/oder die zentrale Prozessoreinheit (25) in letzterem (3) untergebracht ist.

8. Tachymeter-Fernrohr nach einem der Ansprüche 1 bis 6, **dadurch gekennzeichnet, dass** es ein an einem Theodolitgehäuse (2) angeordnetes Fernrohrgehäuse (3) aufweist, und dass wenigstens eine der Steuer- und Auswerteeinheiten (24, 27) und/oder die zentrale Prozessoreinheit (25) im Theodolitgehäuse (2) untergebracht ist.

9. Tachymeter-Fernrohr nach einem der vorhergehenden Ansprüche, **dadurch gekennzeichnet, dass** die Distanzmesskombination (23) und/oder die Sendeeinrichtung (S1, S2, S3) mit einer Umschalteinrichtung von einer Betriebsart (20b), wie Distanzmessung über mindestens einen Reflektor des Zielobjekts (16), auf eine andere Betriebsart (20a), wie Distanzmessung über die natürliche Oberfläche des Zielobjekts (16), versehen ist.

10. Tachymeter-Fernrohr nach einem der vorhergehenden Ansprüche, **dadurch gekennzeichnet, dass** der Distanzmesskombination (23) eine Multisegmentoptik (18c, 218;) mit Zonen unterschiedlicher Brennweiten zugeordnet ist.

11. Tachymeter-Fernrohr nach einem der vorhergehenden Ansprüche, **dadurch gekennzeichnet, dass** mindestens die an die Distanzmesskombination (23) angeschlossene erste Steuer- und Auswerteeinheit (24) einen gesonderten Auswerteprozessor aufweist.

12. Tachymeter-Fernrohr nach einem der vorhergehenden Ansprüche, **dadurch gekennzeichnet, dass** der ersten optoelektronischen Sensoreinrichtung (21) und der zweiten in zwei Betriebsarten (20a, 20b) betreibbaren Sensoreinrichtung (19, 20a, 20b) bzw. der zweiten und der dritten Sensoreinrichtung (19, 20a; 19, 20b) senderseitig jeweils ein von der Sendeeinrichtung (S1, S2, S3) ausgesendetes Strahlenbündel mit dem jeweiligen Wellenlängenbereich λ₂, λ₃, λ₄ zugeordnet ist.

13. Tachymeter-Fernrohr nach einem der vorhergehenden Ansprüche, **dadurch gekennzeichnet, dass** ein sichtbares, von der Sendeeinrichtung (S1, S2, S3) ausgesendetes Strahlenbündel mit dem Wellenlängenbereich λ₃ zur Erzeugung einer Zielpunktmarkierung vorgesehen ist.

14. Tachymeter-Fernrohr nach einem der vorhergehenden Ansprüche, **dadurch gekennzeichnet, dass** wenigstens zweien der Sensoreinrichtungen senderseitig eine Strahlungsquelle gemeinsam ist.

15. Tachymeter-Fernrohr nach einem der vorhergehenden Ansprüche, **dadurch gekennzeichnet, dass** der Distanzmesskombination (23) für die Distanzmessung über die natürliche Oberfläche des Zielobjekts (16) der zweite Sender (S2) zur Erzeugung eines beugungsbegrenzten dünnen, insbesondere kollimierten, Strahlenbündels mit dem Wellenlängenbereich λ₃, vorzugsweise im sichtbaren Bereich des Lichtes, zugeordnet ist.

16. Tachymeter-Fernrohr nach den Ansprüchen 13, 14 und 15, **dadurch gekennzeichnet, dass** das Strahlenbündel zur Erzeugung der Zielpunktmarkierung von dem zweiten Sender (S2) zur Erzeugung des beugungsbegrenzten dünnen Strahlenbündels mit dem Wellenlängenbereich λ₃ ausgesendet wird.

17. Tachymeter-Fernrohr nach einem der vorhergehenden Ansprüche, **dadurch gekennzeichnet, dass** die Sendeeinrichtung (S1, S2, S3) zur Aussendung mindestens zweier, maximal dreier Strahlenbündel angeordnet ist, wobei jedes Strahlenbündel in unterschiedlichen Spektralbereichen bzw. Wellenlängenbereichen λ₂, λ₃, λ₄ liegt.

18. Tachymeter-Fernrohr nach einem der vorhergehenden Ansprüche, **dadurch gekennzeichnet, dass** die Sendeeinrichtung (S1, S2, S3) ein vom Umgebungslicht λ₁ bzw. von natürlichem, für das Auge sichtbaren Tageslicht unterschiedliches Spektrum bzw. unterschiedliche Wellenlängenbereiche λ₂,λ₃,λ₄ abstrahlt.

## Claims

1. Tacheometer telescope for optical distance measurement in geodetic, industrial and construction surveying, comprising
- an optical telescope lens (11);
- a motor-powered theodolite as a telescope support;
- a central processor unit (25) for controlling and regulating the motor-powered theodolite axes (H, V);
- a transmitting means (S1, S2, S2) which emits a first beam having a first wavelength range λ₂ to target object (16) to be surveyed and has a first transmitter (S1) and/or a second transmitter (S2) and/or a third transmitter (S3);
- a first optoelectronic sensor means having a position-sensitive area sensor (21) for receiving the rays of the first beam which are reflected by the target object (16);
- a second control and evaluation unit (27) coordinated with this first optoelectronic sensor means and intended for automatic target recognition, optionally with determination of the residual angle;
**characterized in**
- **that** the transmitting means (S1, S2, S3) is arranged for emitting a second beam having a second wavelength range λ₃ and a third beam having a third wavelength range λ₄, the second beam having the wavelength range λ₃ being substantially diffraction-limited;
- and **that** a distance measuring combination (23) is provided for distance measurement via at least one reflector or at least one target mark to the target object (16) to be measured on the one hand and via the natural surface of the target object (16) without such a target marking on the other hand, with the aid of a second sensor means (19, 20a, 20b) which can be operated in two modes (20a, 20b), or with the aid of a second sensor means (19, 20a) and a third sensor means (19 20b) for receiving those rays of one each of the second and third beams having the respective wavelength ranges λ₃ and λ₄, respectively, which are reflected by the target object (16);
- and **that** a first control and evaluation unit (24) coordinated with the distance measuring combination (23) is provided for evaluating the signal which corresponds to those rays of one each of the second and third beams having the respective wavelength ranges λ₃ and λ₄, respectively, which are reflected by the target object (16), and for determining the distance from transit time and/or phase position relative to the transmitted signal;
- and **that** the target axes of all these sensor means (19, 20a; 19, 20b; 21) coincide and form a common axis (A);
- and **that** the three beams having the respective wavelength ranges λ₂, λ₃, λ₄ and the rays reflected by the target object (16) and received by the sensor means (19, 20a; 19, 20b; 21) act coaxially.

2. Tacheometer telescope according to Claim 1, **characterized in that** it additionally has a visual channel, in particular to an eyepiece (28), apart from optical transmitting and receiving channels.

3. Tacheometer telescope according to Claim 1 or 2, **characterized in that** at least one beam path is deflected by a dichroic divider (13-15; 18a; 18b, 118b, 218).

4. Tacheometer telescope according to any of the preceding Claims, **characterized in that** at least one of all these sensor means (19, 20a; 19, 20b; 21) and/or the transmitting means (S1, S2, S3) can be actuated serially via the respective control and evaluation unit (24, 27) and the central processor unit (25), or the first transmitter (S1) directly from the central processor unit (25).

5. Tacheometer telescope according to any of the preceding Claims, **characterized in that** at least one of all these sensor means (19, 20a; 19, 20b; 21) and/or the transmitting means (S1, S2, S3) can be actuated and is active in parallel or simultaneously via the respective control and evaluation unit (24, 27) and the central processor unit (25), or the first transmitter (S1) directly from the central processor (25).

6. Tacheometer telescope according to Claim 5, **characterized in that** the first transmitter (S1) of the transmitting means (S1, S2, S3) or the first optoelectronic sensor means (21) for the image or position evaluation can be actuated simultaneously with the second transmitter (S2) of the transmitting means (S1, S2, S3) or either the second sensor means (19, 20a, 20b) operated in the second mode (20b) or the third sensor means (19, 20b) can be actuated, the second sensor means (S1, S2, S3) operated in the second mode (20b) and the third sensor means (19, 20b) being provided for the distance measurement via at least one reflector or at least one target mark with respect to a target object (16) to be measured.

7. Tacheometer telescope according to any of the preceding Claims, **characterized in that** it has a telescope housing (3) arranged on a theodolite housing (2), and that at least one of the control and evaluation units (24, 27) and/or the central processor unit (25) is housed in the latter (3).

8. Tacheometer telescope according to any of the Claims 1 to 6, **characterized in that** it has a telescope housing (3) arranged on a theodolite housing (2), and that at least one of the control and evaluation units (24, 27) and/or the central processor unit (25) is housed in the theodolite housing (2).

9. Tacheometer telescope according to any of the preceding Claims, **characterized in that** the distance measuring combination (23) and/or the transmitting means (S1, S2, S3) is provided with a switching means for switching from one mode (20b), such as distance measurement via at least one reflector of the target object (16), to another mode (20a), such as distance measurement via the natural surface of the target object (16).

10. Tacheometer telescope according to any of the preceding Claims, **characterized in that** a multisegment optical system (18c, 218) having zones of different focal distances is coordinated with the distance measuring combination (23).

11. Tacheometer telescope according to any of the preceding Claims, **characterized in that** at least the first control and evaluation unit (24) connected to the distance measuring combination (23) has a separate evaluating processor.

12. Tacheometer telescope according to any of the preceding Claims, **characterized in that** in each case a beam emitted by the transmitting means (S1, S2, S3) and having the respective wavelength range λ₂, λ₃, λ₄ is coordinated on the transmitter side with the first optoelectronic sensor means (21) and the second sensor means (19, 20a, 20b) operated in two modes (20a, 20b) or the second and third sensor means (19, 20a; 19, 20b).

13. Tacheometer telescope according to any of the preceding Claims, **characterized in that** a visible beam emitted by the transmitting means (S1, S2, S3) and having the wavelength range λ₃ is provided for generating a target point marking.

14. Tacheometer telescope according to any of the preceding Claims, **characterized in that** at least two of the sensor means have a common radiation source on the transmitter side.

15. Tacheometer telescope according to any of the preceding Claims, **characterized in that** the second transmitter (S2) for generating a diffraction-limited thin, in particular collimated, beam having the wavelength range λ₃, preferably in the visible range of light, is coordinated with the distance measuring combination (23) for the distance measurement via the natural surface of the target object (16).

16. Tacheometer telescope according to any of Claims 13, 14 and 15, **characterized in that** the beam for generating the target point marking is emitted by the second transmitter (S2) for generating the diffraction limited thin beam having the wavelength range λ₃.

17. Tacheometer telescope according to any of the preceding Claims, **characterized in that** the transmitting means (S1, S2, S3) is arranged for emitting at least two and not more than three beams, each beam being in different spectral ranges or wavelength range λ₂, λ₃, λ₄.

18. Tacheometer telescope according to any of the preceding Claims, **characterized in that** the transmitting means (S1, S2, S3) emits a spectrum differing from ambient light λ₁ or from natural daylight visible to the eye or emits different wavelength ranges λ₂, λ₃, λ₄.

## Revendications

1. Télescope tachymètrique pour la mesure optique des distances dans le domaine de la mesure géodésique, industrielle et de la technique de construction, comprenant :
- un objectif de télescope (11) optique;
- un théodolite motorisé, faisant office de support de microscope;
- une unité de processeur central (25) pour la commande et le réglage des axes de théodolite (H, V) motorisés;
- un dispositif émetteur (S1, S2, S3) émettant un premier faisceau de rayons d'une première longueur d'onde λ₂ sur un objet cible (16) à mesurer, le dispositif émetteur étant équipé d'un premier émetteur (31) et/ou d'un deuxième émetteur (S2) et/ou d'un troisième émetteur (S3);
- un premier dispositif à capteur optoélectronique, avec un capteur de surface (21) sensible à la position, pour la réception des rayons, réfléchis sur l'objet cible (16), du premier faisceau de rayons;
- une deuxième unité de commande et d'évaluation (27) associée à ce premier dispositif à capteur optoélectronique, pour effectuer la détection automatique de cibles, le cas échéant avec détermination angulaire de l'angle résiduel;
**caractérisé en ce que**
- le dispositif émetteur (S1, S2, S3) est disposé pour émettre un deuxième faisceau de rayons d'une deuxième plage de longueur d'onde de λ₃ et un troisième faisceau de rayons d'une troisième plage de longueur d'onde λ₄, le deuxième faisceau de rayons ayant la plage de longueur d'onde λ₃ étant sensiblement limité en diffraction;
- et **en ce qu'**une combinaison de mesures de distance (23) est prévue, pour effectuer la mesure de distance par l'intermédiaire d'au moins un réflecteur ou d'au moins un repère de visée par rapport à l'objet cible (16) à mesurer d'une part, et par l'intermédiaire de la surface naturelle de l'objet cible (16) ne comportant pas de telle caractérisation de cible, d'autre part, à l'aide d'un deuxième dispositif à capteur (19, 20a, 20b) pouvant fonctionner sous deux types de fonctionnement (20a, 20b), ou bien à l'aide d'un deuxième dispositif à capteur (19, 20a) et d'un troisième dispositif à capteur (19, 20b) pour la réception des rayons réfléchis sur l'objet cible (16) de chaque fois l'un des deuxième et troisième faisceau de rayons ayant les plages de longueur d'onde λ₃ ou λ₄ respectives;
- et **en ce qu'**une première unité de commande et d'évaluation (24), associée à la combinaison de mesures de distance (23), est prévue, pour évaluer un signal qui correspond aux rayons, réfléchis sur l'objet cible (16), chaque fois de l'un des deuxième et troisième faisceaux de rayons, ayant les plages de longueur d'onde λ₃ ou λ₄ respectives, et pour déterminer la distance à partir du temps de parcours et/ou la position de phase par rapport au signal envoyé,
- et **en ce que** les axes de cible de la totalité de ces dispositifs à capteur (19, 20a; 19, 20b; 21) coïncident et forment un axe (A) commun;
- et **en ce que** les trois faisceaux de rayons ayant les plages de longueur d'onde λ₂, λ₃, λ₄ respectives et les ratons captés par les dispositifs à capteur (19, 20a; 19, 20b; 21), qui se reflètent sur l'objet cible (16), ont un effet coaxial.

2. Télescope tachymètrique selon la revendication 1, **caractérisé en ce que**, outre un canal émetteur et récepteur optique réceptif, il présente en plus un canal visuel, en particulier allant à un oculaire (28).

3. Télescope tachymètrique selon la revendication 1 ou 2, **caractérisé en ce qu'**au moins un trajet de rayon est dévié par un diviseur dichroïque (13 à 15; 18a; 18b, 118b, 218).

4. Télescope tachymètrique selon l'une des revendications précédentes, **caractérisé en ce qu'**au moins l'un de la totalité de ces dispositifs capteurs (19,20a; 19,20b; 21) et/ou le dispositif émetteur (S1 A S3) peu(ven)t être commandé(s) de façon sérielle, par l'intermédiaire de l'unité de commande et d'évaluation (24, 25) respective et de l'unité de processeur central (25), ou bien le premier émetteur (S1) directement depuis le processeur central (21).

5. Télescope tachymètrique selon l'une des revendications précédentes, **caractérisé en ce qu'**au moins l'un de la totalité de ces dispositifs capteurs (19,20a; 19,20b; 21) et/ou les dispositifs émetteurs (S1, S2, S3) peu(ven)t être commandé(s), de façon parallèle ou simultanée, et être actif(s), par l'intermédiaire de l'unité de commande et d'évaluation (24, 27) respective et l'unité à processeur central (25), ou bien le premier émetteur (S1), directement depuis le processeur central (25).

6. Télescope tachymètrique selon la revendication 5, **caractérisé en ce que** le premier émetteur (S1) du dispositif émetteur (S1, S2, S3), ou le premier dispositif à capteur optoélectronique (21) pour l'évaluation d'image ou de position (53), soit du deuxième dispositif à capteur (19, 20a 20b) fonctionnant dans le deuxième type de fonctionnement (20b), soit du troisième dispositif à capteur (19, 20b) est susceptible d'être commandé, le deuxième dispositif à capteur (19, 20a 20b) fonctionnant dans le deuxième type de fonctionnement (20b), ou le troisième dispositif à capteur (19b, 20b) étant prévu pour la mesure de distance par rapport à un objet cible (16), par l'intermédiaire d'au moins un réflecteur ou d'au moins un repère de visée.

7. Télescope tachymètrique selon l'une des revendications précédentes, **caractérisé en ce qu'**il présente un boîtier de télescope (3), disposé sur un boîtier de théodolite (2), et **en ce qu'**au moins l'une des unités de commande et d'évaluation (24, 27) et/ou l'unité de processeur central (25) est logée dans ce dernier boîtier (3).

8. Télescope tachymètrique selon l'une des revendications 1 à 6 précédentes, **caractérisé en ce qu'**il présente un boîtier de télescope (3), disposé sur un boîtier de théodolite (2), et **en ce qu'**au moins l'une des unités de commande et d'évaluation (24, 27) et/ou l'unité de processeur central (25) est logée dans le boîtier de théodolite (2).

9. Télescope tachymètrique selon l'une des revendications précédentes, **caractérisé en ce que** la combinaison de mesures de distance (23) et/ou le dispositif émetteur (S1, S2, S3) est/sont muni(s) d'un dispositif de commutation, pour passer d'un type de fonctionnement (20b), tel que la mesure de distance, par l'intermédiaire d'au moins un réflecteur de l'objet cible (16), à un autre type de fonctionnement (20a), tel que la mesure de distance, par l'intermédiaire de la surface naturelle de l'objet cible (16).

10. Télescope tachymétrique selon l'une des revendications précédentes, **caractérisé en ce qu'**à la combinaison de mesures de distance (23) est associée une optique multisegments (18c, 218;) comportant des zones à distances focales différentes.

11. Télescope tachymètrique selon l'une des revendications précédentes, **caractérisé en ce qu'**au moins la première unité de commande et d'évaluation (24), raccordée à la combinaison de mesures de distance (23), présente un processeur d'évaluation séparé.

12. Télescope tachymètrique selon l'une des revendications précédentes, **caractérisé en ce qu'**au premier dispositif à capteurs optoélectroniques (21) et au deuxième dispositif à capteurs, pouvant fonctionner en deux types de fonctionnement (20a, 20b), ou au deuxième et au troisième dispositifs à capteurs (19, 20a; 19,20b) est associé, côté émetteur, chaque fois un faisceau de rayons, émis depuis le dispositif émetteur (S1, S2, S3), faisceau ayant la plage de longueur d'ondes λ₂, λ₃, λ₄, respective.

13. Télescope tachymètrique selon l'une des revendications précédentes, **caractérisé en ce qu'**un faisceau de rayons visible émis par le dispositif émetteur (S1, S2, S3) ayant la plage de longueur d'ondes λ₃ est prévu pour générer un marquage de point cible.

14. Télescope tachymètrique selon l'une des revendications précédentes, **caractérisé en ce qu'**au moins deux des dispositifs capteurs ont, côté émetteur, en commun une source de rayonnement.

15. Télescope tachymètrique selon l'une des revendications précédentes, **caractérisé en ce qu'**à la combinaison de mesures de distance (23), pour la mesure de distlance, par l'intermédiaire de la surface naturelle de l'objet cible (16), est associé le deuxième émetteur (S2) pour générer un faisceau de rayons mince limité en diffraction, en particulier colimaté, ayant la plage de longueur d'ondes λ₃, de préférence dans la plage visible de la lumière.

16. Télescope tachymètrique selon les revendications 13, 14 et 15, **caractérisé en ce que** le faisceau de rayons, pour générer le marquage de point cible, est émis depuis le deuxième émetteur (S2) pour générer le faisceau de rayons, mince, limité en diffraction, ayant la plage de longueur d'ondes λ₃.

17. Télescope tachymètrique selon l'une des revendications précédentes, **caractérisé en ce que** le dispositif émetteur (S1, S2, S3) est disposé pour émettre au moins deux, au maximum trois faisceaux de rayons, chaque faisceau de rayons étant situé dans des plages spectrales ou des plages de longueur d'ondes λ₂, λ₃ à λ₄ différentes.

18. Télescope tachymètrique selon l'une des revendications précédentes, **caractérisé en ce que** le dispositif émetteur (S1, S2, S3) émet un rayonnement, d'un spectre différent, ou de plages de longueur d'ondes λ₂, λ₃ à λ₄ différentes de la lumière ambiante λ₁, ou de la lumière du jour naturelle, visible à l'oeil nu.
